# EUROPÄISCHE PATENTANMELDUNG

(11) **EP 1 376 383 A2**
(43) Veröffentlichungstag der Anmeldung: **02.01.2004**
(21) Anmeldenummer: 03006397.8
(22) Anmeldetag: 20.03.2003
(51) Int. Cl.: G06F 17/18

(54) **Verfahren zur Verarbeitung von Ein- und Ausgaben für statistische Analysen und Verfahren zur Bereinigung von Redundanzen**

(30) Priorität: 23.03.2002 DE 10213174
(71) Anmelder: Noll, Uwe, 64285 Darmstadt (DE); Drach, Valeriy, Brooklyn, New York 11226 (US)
(72) Erfinder: Noll, Uwe, 64285 Darmstadt (DE); Drach, Valeriy, Dr., Brooklyn, New York 11226 (US)
(74) Vertreter: 2K Patentanwälte, Kewitz & Kollegen

(57) **Zusammenfassung**

Die Erfindung umfasst ein Verfahren, bei dem Datenmengen aus unterschiedlichen Tabellen und Datenbanken gesammelt und in einer eindeutig strukturierten Zwischentabelle abgelegt werden. Die Strukturierung dieser Tabelle ist so ausgebildet, dass die Vielzahl von stochastischen Algorithmen jederzeit ohne Anpassung der Datenmengen, die in der Zwischentabelle abgelegt sind, Auswertungen fahren können. Diese eindeutig strukturierte Zwischentabelle erstreckt sich über mehrere Dimensionen, wobei die Algorithmen, die die Auswertung vornehmen, in der Lage sind zu erkennen, wie viele Dimensionen tatsächlich benutzt werden. Eine mögliche Ausgestaltung der Tabelle ist, dass z. B. die ersten zehn Spalten numerische Werte umfassen und die anderen Spalten Werte anderen Typs. Rechenoperationen werden somit nur auf den ersten zehn Spalten durchgeführt. Der Kopieralgorithmus ist dabei so ausgebildet, dass eine eindeutige Abbildung der Typen auf die bereitgestellten Typen bzw. Spalten stattfindet.

## Beschreibung

Die Erfindung betrifft ein computergestütztes Verfahren zur statistischen Auswertung von Daten. Insbesondere umfasst die Erfindung eine Möglichkeit, einen vorhandenen Code einfach wiederzuverwenden, indem Strukturen verwendet werden, die so abstrakt gehalten sind, dass Änderungen am Programmcode nicht notwendig sind.

### Gebiet der Erfindung:

Insbesondere im Bereich der Telekommunikation ist es oftmals notwendig, Auswertungen über Fehlerhäufigkeiten, Dienstleistungen, Wartezeiten in unterschiedlichen Regionen oder von unterschiedlichen Personen durchzuführen. Weitere Aspekte sind die Kosten und der durchschnittliche Zeitaufwand, der benötigt wird, um Fehler zu beheben. Hierfür sind unterschiedliche statistische Verfahren einzusetzen, die auf unterschiedliche Datenmengen zurückgreifen, die unterschiedlich zusammenzustellen sind. Aufgrund der großen Komplexität und der Vielzahl von Möglichkeiten, die es in diesem Bereich gibt, ist es Aufgabe der Erfindung, ein Verfahren bereitzustellen, das es ermöglicht, ohne große Umstellung des Programmcodes eine Vielzahl von Auswertungen auszuführen.

Diese Aufgabe wird durch die Erfindungen gemäß den Merkmalen der unabhängigen Ansprüche gelöst. Vorteilhafte Weiterbildungen der Erfindungen sind in den Unteransprüchen gekennzeichnet.

Abstrakt betrachtet, werden Datenmengen aus unterschiedlichen Tabellen und Datenbanken gesammelt und in einer eindeutig strukturierten Zwischentabelle abgelegt. Die Strukturierung dieser Tabelle ist so ausgebildet, dass die Vielzahl von stochastischen Algorithmen jederzeit ohne Anpassung der Datenmengen, die in der Zwischentabelle abgelegt sind, Auswertungen fahren können. Diese eindeutig strukturierte Zwischentabelle erstreckt sich über mehrere Dimensionen, wobei die Algorithmen, die die Auswertung vornehmen, in der Lage sind zu erkennen, wie viele Dimensionen tatsächlich benutzt werden. Eine mögliche Ausgestaltung der Tabelle ist, dass z. B. die ersten zehn Spalten numerische Werte umfassen und die anderen Spalten Werte anderen Typs. Rechenoperationen werden somit nur auf den ersten zehn Spalten durchgeführt. Der Kopieralgorithmus ist dabei so ausgebildet, dass eine eindeutige Abbildung der Typen auf die bereitgestellten Typen bzw. Spalten stattfindet.

Im Einzelnen handelt es sich um ein Verfahren zur statistischen Auswertung von Daten unter Verwendung einer Eingabemaske, über die Datenmengen bestimmt werden, wobei vorzugsweise über die Auswahl von Spalten und Selektionskriterien Teilmengen dieser Datenmengen bestimmt werden. Die Selektionskriterien können dabei Meta-Zeichen umfassen, wie z. B. einen Asterix(*) oder andere Platzhalter. Die Felder der Datenmaske können sich aus Spalten unterschiedlicher Tabellen zusammensetzen. Die Tabellen können wiederum in unterschiedlichen Datenbanken abgelegt sein. Es ist darauf hinzuweisen, dass auch andere Datenbanken wie objektorientierte Datenbanken oder ISA-Modelle oder neuronale Netze verwendet werden können. Mit Hilfe der Eingabemaske, die von Fall zu Fall unterschiedlich ausgebildet sein kann, je nachdem wie viele Datenbanken und Attribute referenziert wurden, wird die Datenmenge bestimmt, die in die Zwischentabelle kopiert wird. In einer bevorzugten Ausführungsform wird die Eingabemaske automatisch generiert, je nachdem welche Datenquellen im Vorfeld gewählt wurden.

Die vorliegende Zusatzanmeldung berücksichtigt, dass der Auslastungsgrad der Vermittlungsstellen ebenfalls als statistischer Algorithmus unterstützt wird. Als Zielgröße können die Auslastung und die Störungshäufigkeit berücksichtigt werden. Andere Verfahren, die ebenfalls die Auslastung berücksichtigen, sind ebenfalls denkbar. Die Auslastung kann sowohl dynamisch als auch statisch bestimmt werden.

Der statische Auslastungsgrad bestimmt sich aus dem Quotienten von belegten Ports zu den gesamten Ports eines SDH-Gerätes.

Der dynamische Auslastungsgrad bildet sich aus dem Verhältnis von Auslastungen der belegten Ports zu allen belegten Ports. Sollte der dynamische Auslastungsgrad einen bestimmten Grenzwert überschreiten, dann muss es zu einer Erweiterung im System durch Einschieben zusätzlicher Karten kommen. Weiterhin gibt es die Möglichkeiten, den Grenzwert für die Auslastung mit einem zusätzlichen Zeitfenster Faktor zu belegen. Hierdurch kann eine Erweiterung erst dann notwendig sein, wenn über einen bestimmten Zeitraum die Auslastung über dem vorgegebenen Grenzwert liegt.

Wenn hingegen der statische Auslastungsgrad einen bestimmten Grenzwert überschreitet, dann muss es zu einer Erweiterung des Gesamtsystems kommen. Das heißt, es müssen zusätzliche Netzwerkstränge aufgezogen werden.

Auf der Basis des Auslastungsgrads eines Netzwerkknotens, kann die Auslastung eines ganzen Netzwerkes bestimmt werden. Hierbei wird auf die Normalisierung zurückgegriffen. Es erfolgt der Einsatz der Normalisierung mit dem Maximalwert, wodurch unterschiedliche Dimensionen vergleichbar werden. Der Quotient aus den belegten Ports und der gesamten Anzahl der vorhandenen Ports in Bezug auf eine Dimension/Einheit ermöglicht es, den Belegungsgrad zu bestimmen. Hierbei spiegelt die geeignete Zusammenfassung der Werte den jeweiligen gewünschten Belegungsgrad wider.

Hierdurch ist eine erhebliche Verbesserung der Dokumentationen eines Netzes möglich, wodurch eine vollständige und einheitliche Dokumentation der WDM/SDH-Verbindungen (auch Raumbedarfsplanung hinsichtlich Stellfläche zwecks Neuanmietung) sowie die für moderne Netzelemente unverzichtbare Darstellung des Auslastungsgrades erfolgen kann. Eine vollständige Netzdokumentation ist Voraussetzung dafür, dass Netze betrieben werden können und Kunden termingerecht Produkte bereitgestellt werden können. Die Analyse erleichtert nicht nur die Bearbeitung von Ü-Wegschaltungen, sondern sie führt auch zu Verbesserungen der Störungsbearbeitung. Diese Vorteile resultieren auch aus dem Einsatz der Normalisierung mit dem konkreten Maximal-Wert hinsichtlich jeder Dimension, wodurch unterschiedliche Dimensionen vergleichbar werden, indem der Quotient aus den belegten Einheiten (z. B. Ports) zu der Gesamtanzahl der vorhandenen Einheiten (z. B. Ports) in Bezug auf eine Dimension/Einheit den Auslastungsgrad wiedergibt und die geeignete Zusammenfassung der Werte in Bezug auf die gewünschten Gesamteinheiten den jeweils gewünschten Auslastungsgrad in jeder beliebigen "Drill-Down" Hierarchie widerspiegelt. Da mit der Statistik-Eingabemaske die Ermittlung von Gesamteinheiten und belegten Einheiten sehr einfach durchzuführen ist, ist eine anschließende Auslastungsgradermittlung leicht vorzunehmen.

In einem weiteren Schritt werden die Datenmengen bestimmt, die in die Zwischentabelle kopiert werden sollen. Dies erfolgt durch Selektionskriterien in den einzelnen Maskenfeldern.

Bevorzugt werden nur die Daten in die Zwischentabelle kopiert, die auch in der Eingabemaske selektiert wurden. Vorzugsweise automatisch wird dann anhand des Typs der selektierten Merkmale entschieden, in welche Spalten der Zwischentabelle die Informationen kopiert werden.

Vorzugsweise nach dem Kopieren wird das statistische Verfahren ausgewählt. Hierbei wird der Benutzer durch eine entsprechende Maske geführt. In einer bevorzugten Ausführungsform kann nun angegeben werden, welche Werte bei der Durchführung der Statistiken aus der Zwischentabelle zu berücksichtigen sind. Dies ist insbesondere dann von Vorteil, wenn Alternativen für die Berechnung der Statistik zur Verfügung stehen. So ist es z. B. denkbar, dass in einem Standardmodus aufsteigend die ersten Spalten als Parameter für die Statistiken zu berücksichtigen sind. Sollte von diesem Ansatz abgewichen werden, so hat der Benutzer die Möglichkeit, andere Parameter (Spalten) zu bestimmen, die in die Auswertung einfließen sollen.

Aufgrund der wohldefinierten Struktur der Zwischentabelle kann nun das statistische Verfahren ausgeführt werden.

Aufgrund von fehlerhaften Benutzereingaben ist es oftmals nicht zu vermeiden, dass Informationen redundant abgelegt werden. Diese Redundanzen können mögliche Statistiken verfälschen. Um dieser Problematik entgegenzuwirken, wird vor dem Kopiervorgang oder nach dem Kopiervorgang eine Überprüfung auf redundante Datensätze vorgenommen. Bei diesem Verfahren wird in einem ersten Schritt ein Cursor definiert, der zeilenweise durch die Relationen läuft. In einem weiteren Schritt wird der Datensatz gelesen, der zur Überprüfung von redundanten Informationen herangezogen werden soll. Anhand einer SQL-Abfrage, die nach Duplikaten sucht, werden redundante Datensätze herausgefunden. Zur Vermeidung eines Overheads wird bevorzugt lediglich ein Feld überprüft, das komprimierte Informationen aller weiteren Attribute zusammenfasst. Somit ist es möglich, durch lediglich eine Vergleichsoperation festzustellen, ob eine identische Zeile (Tupel) vorliegt oder nicht. Eine Kompression kann z. B. durch eine Ex/Or-Verknüpfung aller Attribute stattfinden. Nur wenn eine Identität vorliegen sollte, werden explizit alle Attribute überprüft, wenn eine bijektive Komprimierung nicht vorliegen sollte. Sollte ein solches komprimiertes Attribut nicht vorliegen, so wird vorzugsweise in einem vorgeschalteten Verfahrenschritt eine weitere temporäre Tabelle erstellt, die lediglich aus einem primären eindeutigen Schlüssel besteht und dem komprimierten Attribut. Dieses komprimierte Attribut wird natürlich indiziert. Somit ist eine einfache Überprüfung auf Redundanz jederzeit möglich.

Statistiken über die redundanten Werte werden vorzugsweise in einer weiteren Statistiktabelle abgelegt.

Einsatz des Octa-Cleansing-Tools zur Erkennung von Änderungen, Fallbeispiel Auftragsmanagement.

In der Auftragsmanagement-Datenbanktabelle werden die Aufträge gehalten. Überdies wird eine Copy mit Zeitstempel DD.MM.JJJJ Time von der aktuellen Auftragsmanagemant-Datenbanktabelle gezogen. Die zuständigen Mitarbeiter müssen die Aufträge monitoren. Hierbei sind die Auftragsänderungen, z. B. in den Auftrags-Attributen [Beginndatum], [Enddatum], [Lieferverzögerungen], [Auftraggeber], [Auftragnehmer], [freigegebene Mittel] usw. nach Verstreichen eines stündlichen, täglichen, monatlichen Definitions-(x+1) Zeitraumes höchst interessant. Durch Einsatz des Data-Cleansing-Tools Algorithmus können diese Änderungen durch Vergleich der gespeicherten, gesicherten Datenbanktabelle mit der zum (x+1) Zeitpunkt aktuellen Datenbanktabelle auf einfache Art detektiert werden und durch Farbe, andere Schriftart in den Auftragsmanagement-Rekordattributen auf dem Bildschirm visualisiert werden. Außerdem können Sie in eine neue Tabelle eingefügt werden, wo Sie gezielt analysiert und bearbeitet werden.

Überdies kann der Algorithmus des Octa-Cleansing-Tools als Ladealgorithmus für Importdaten in Datenbanken verwendet werden, indem nach den zu importierenden Datenrekords mit dem Octa-Cleansing-Tool in der Datenbank gesucht wird. Wird der zu importierende Datensatz einmal detektiert, dann handelt es sich um ein Update-Verfahren, bei Mehrfachdetektion um Redundanz, welche als Fehler erkannt wird und in einer separaten Fehlertabelle gehalten wird. Sollte der zu importierende Datensatz nicht in der Datenbank vorhanden sein, dann erfolgt die Einfügung eines neuen Datensatzes in der Datenbank.

Weitere Bestandteile der Erfindung sind Computerprogramme, die beim Ablauf auf einem Computer das Verfahren nach einem oder mehreren der vorhergehenden Verfahrensansprüche ausführen.

Die Erfindung umfasst ebenfalls einen Datenträger, auf dem eine Datenstruktur gespeichert ist, die nach dem Laden in einen Hauptspeicher eines Computers das Verfahren nach einem oder mehreren der vorhergehenden Verfahrensansprüche ausführt.

Ein Computersystem, bestehend aus einem oder mehreren Servern, das durch Mittel gekennzeichnet ist, insbesondere Speicher, Netzwerkeinheiten, Prozessoren und Bussysteme, die so ausgebildet und eingerichtet sind, dass ein Verfahren nach einem oder mehreren der vorhergehenden Verfahrensansprüche ausgeführt wird, ist ebenfalls Teil der Erfindung

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:
- Fig. 1: einen schematischen Ablauf des Verfahrens zur Erstellung einer Zwischentabelle und der Anwendung eines statistischen Algorithmus, der auf die eindeutig strukturierte Tabelle zugreift;
- Fig. 2: eine Datenbankstruktur, die ein komprimiertes Attribut umfasst, um Redundanzen in einer Datenbank zu ermitteln;
- Fig. 3: Aufbau eines Netzwerkes mit SDH-Baugruppen, die wiederum mit anderen Netzwerkkomponenten verbunden sind;
- Fig. 4: ein internationales Netzwerk mit nationalen Netzknoten sowie deren Berechnung;
- Fig. 5: Formel für die Berechnung des Auslastungsgrades eines internationalen Netzwerkes.

Im Rahmen der Erfindung sind zahlreiche Abwandlungen und Weiterbildungen der beschriebenen Ausführungsbeispiele verwirklichbar.

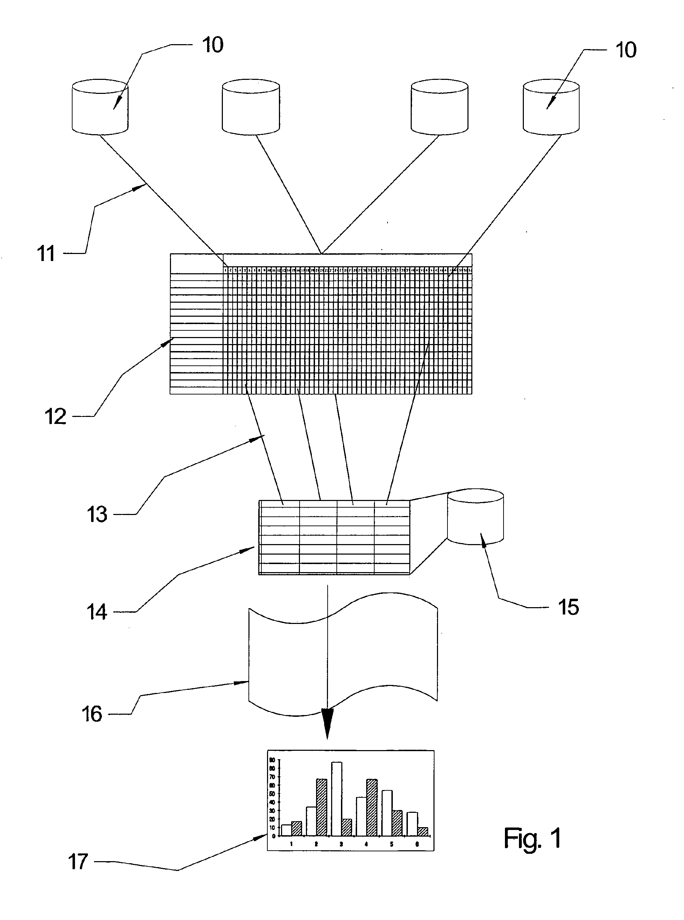

Im Folgenden werden einige Ausführungsbeispiele beschrieben. So zeigt die Figur 1 den Verfahrensablauf nach Anspruch 1. Eine Eingabemaske 12 hat Zugriff über Referenzen 11 zu einer Reihe von externen Datenbanken 10. Ein Benutzer kann in die Eingabemaske Werte und Selektionskriterien eingeben. Lediglich die so verwendeten Attribute bzw. Spalten werden in eine Zwischentabelle 14 kopiert. Die Spalten der Zwischentabelle stehen in Referenz 13 zu der Eingabemaske 12.

Bei dem Kopiervorgang werden lediglich die in der Eingabemaske verwendeten Spalten und Attribute berücksichtigt. Wie bereits oben beschrieben besitzt die Zwischentabelle 14, die in einer Datenbank 15 abgelegt ist, wohldefinierte Strukturen. Hierdurch ist es möglich, dass ein statistischer Algorithmus 16 ohne Anpassung ablaufen und eine grafische Darstellung 17 erzeugen kann. Das betrifft insbesondere die Kennzahlermittlung.

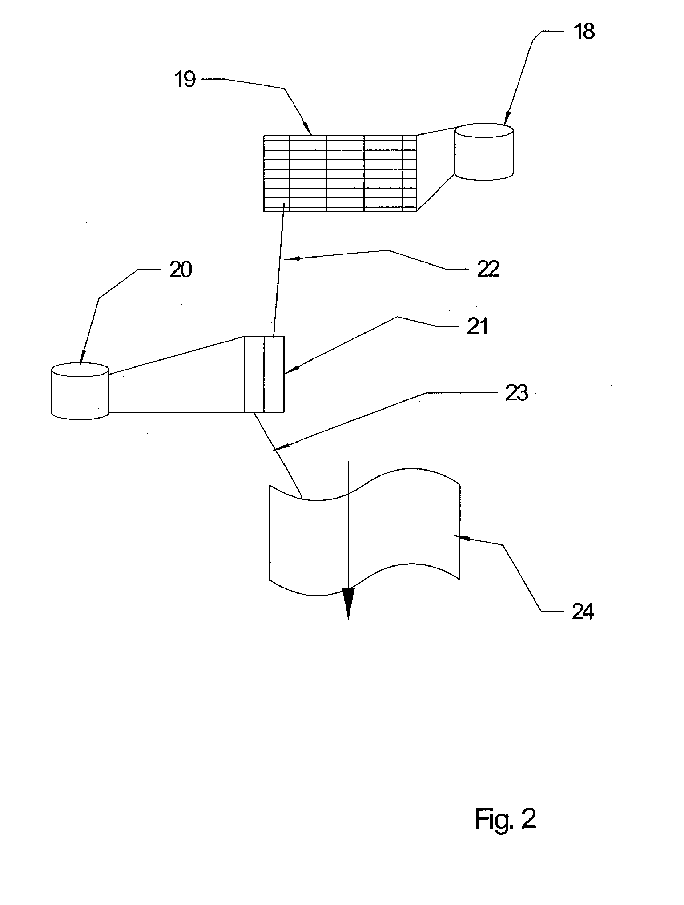

Die Figur 2 zeigt die Struktur einer Datenbank, die Redundanzen ermittelt und vorzugsweise eliminiert. In einer ersten Datenbank 18 ist eine Tabelle 19 abgespeichert, die redundante Informationen enthält. In einer weiteren Datenbank 20 ist eine Tabelle 21 abgelegt, die lediglich eindeutige Schlüssel und komprimierte Attribute enthält. Über den eindeutigen Schlüssel kann die Zeile in der Tabelle 19 referenziert werden. Die entsprechende Referenz ist durch das Bezugszeichen 22 gekennzeichnet.

Der Algorithmus 24 referenziert die Zwischentabelle 21. Aufgrund der Indizierung ist es somit sehr einfach, Redundanzen herauszufinden, die dann, wenn nötig, im Detail anhand der Tabelle 19 überprüft werden.

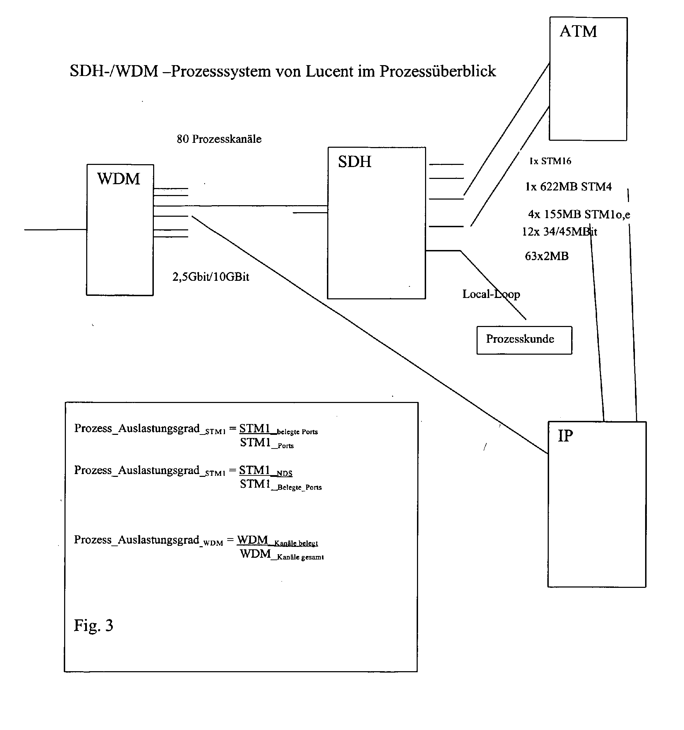

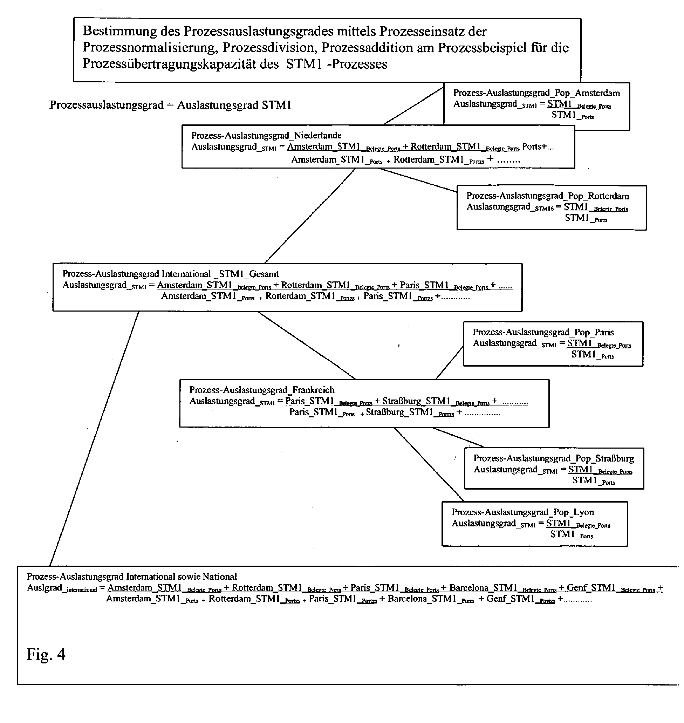

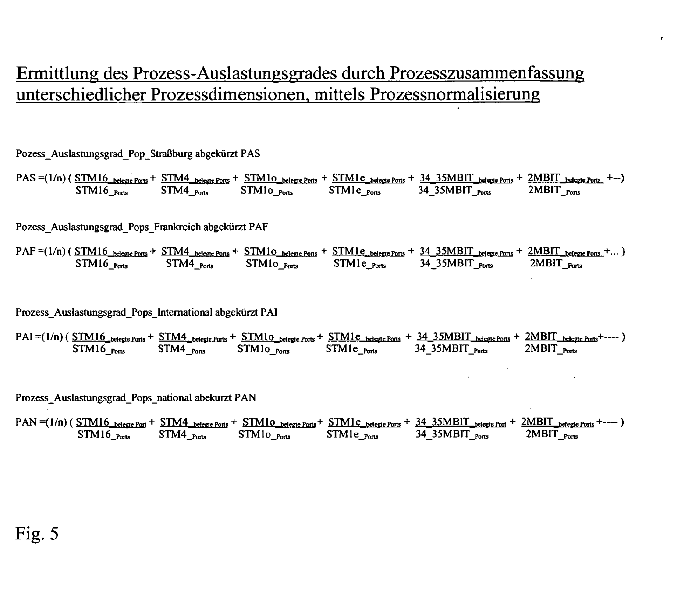

Die Figuren 4 und 5 zeigen die Bestimmung eines Auslastungsgrades für ein weltweites Netzwerk. Die Figur 3 zeigt die Relationen in einer grafischen Form. Die Figur 5 zeigt die Bestimmung in einer mathematischen Formel.

### Bezugszeichen

- 10: externe Datenbanken
- 11: Referenzen zu den Spalten und Attributen
- 12: Eingabemaske
- 13: Referenzen zu der Zwischentabelle
- 14: Zwischentabelle
- 15: Datenbank, in der die Zwischentabelle abgelegt ist
- 16: statistischer Algorithmus
- 17: grafische Darstellung der statistischen Auswertung
- 18: Datenbank, in der eine Tabelle mit redundanten Informationen abgelegt ist
- 19: Tabelle mit redundanten Informationen
- 20: Datenbank, in der eine Tabelle mit einem eindeutigen Schlüssel und einem komprimierten Attribut abgelegt ist
- 21: Tabelle mit einem eindeutigen Schlüssel und einem komprimierten Attribut
- 22: Referenz des eindeutigen Schlüssels auf die Tabelle mit redundanten Informationen
- 23: Zugriff auf die Tabelle mit einem eindeutigen Schlüssel und einem komprimierten Attribut
- 24: Algorithmus, der nach redundanten Informationen sucht

## Patentansprüche

1. Verfahren zur statistischen Auswertung von Daten, unter Verwendung einer Eingabemaske, über die Datenmengen bestimmt werden, wobei vorzugsweise über die Auswahl von Spalten und Selektionskriterien Teilmengen dieser Datenmengen bestimmt werden,
- mit einem Schritt, bei dem die Datenmengen mit Hilfe der Eingabemaske und Selektionskriterien bestimmt werden,
- mit einem weiteren Schritt, bei dem aus einer Mehrzahl von Verfahren ein statistisches Verfahren ausgewählt wird, das auf die Datenmenge anzuwenden ist, wobei ein auswählendes Verfahren den statischen Auslastungsgrad und/oder den dynamischen Auslastungsgrad einer oder mehrerer Vermittlungsstellen bestimmt,
- mit einem weiteren Schritt, bei dem die bestimmten Datenmengen in eine vordefinierte Tabelle von der immer gleichen Struktur kopiert werden, wobei die statistischen Verfahren aufgrund der gleichen Struktur der vordefinierten Tabelle so auf die vordefinierte Tabelle abgestimmt sind, dass unabhängig vom Inhalt eine Auswertung vorgenommen werden kann, ohne dass programmtechnische Änderungen vorzunehmen sind.

2. Verfahren nach dem vorhergehenden Anspruch, **dadurch gekennzeichnet, dass** sich der statische Auslastungsgrad aus dem Verhältnis von belegten Ports in der Vermittlungsstelle zu den Gesamtports eines Gerätes und/oder der dynamische Auslastungsgrad aus dem Verhältnis der Auslastung der belegten Ports zu allen belegten Ports bestimmt.

3. Verfahren nach einem oder mehreren der vorhergehenden Ansprüche, **dadurch gekennzeichnet, dass** die Auslastung einer Vielzahl von Vermittlungsstellen zusammengefasst und normiert wird, wobei die Zusammenfassung vorzugsweise durch eine Addition und die Normierung durch eine Division erfolgt.

4. Verfahren nach dem vorhergehenden Anspruch, **dadurch gekennzeichnet, dass** dem Benutzer ein Dialog angeboten wird, durch den er ein statistisches Verfahren auswählen kann.

5. Verfahren nach einem oder mehreren der vorhergehenden Ansprüche, **dadurch gekennzeichnet, dass** eine Dokumentenmanagementsystemstruktur mit einem Inhaltsverzeichnis vorhanden ist, das die Attribute Ablageserver, Ablagepfandnamen, Dokumentennamen umfasst, wobei zusätzlich weitere optionale Kriterien Dokumenterstellungsdatum, Ersteller und Textsuchkriterien sind.

6. Verfahren nach einem oder mehreren der vorhergehenden Ansprüche, **dadurch gekennzeichnet, dass** der Benutzer bestimmen kann, welche Spalten der vordefinierten Tabelle für eine statistische Auswertung heranzuziehen sind.

7. Verfahren nach einem oder mehreren der vorhergehenden Ansprüche, **dadurch gekennzeichnet, dass** vor der statistischen Auswertung ein Verfahren zur Aufzählung und/oder zum Ausschluss von Redundanzen nach einem oder mehreren der nachfolgenden Schritte angewendet wird.

8. Verfahren zum Ermitteln und/oder Ausschließen von Redundanzen in Tabellen, insbesondere relationalen Tabellen
- mit einem Schritt, bei dem ein Cursor für die relationale Tabelle bestimmt wird, um schrittweise die Zeilen der Tabelle auszulesen, wobei die Zeilen über Schleifen aus der relationalen Tabelle gelesen werden, indem jede Zeile schrittweise aus der relationalen Tabelle gelesen wird,
- mit einem sich wiederholenden Schritt, bei dem die über den Cursor gelesene Zeile über eine SQL-Abfrage mit allen Zeilen der Tabelle verglichen wird, wobei jede Übereinstimmung gezählt wird.

9. Verfahren nach dem vorhergehenden Anspruch, **dadurch gekennzeichnet, dass** eine weitere Tabelle angelegt wird, in der die primären Schlüssel der redundanten Informationen mit einem entsprechenden Zählerwert abgelegt werden.

10. Verfahren nach dem vorhergehenden Verfahrensanspruch, **dadurch gekennzeichnet, dass** die detektierten Änderungen in einer weiteren Tabelle abgelegt werden oder die erkannten Änderungen in der Gesamtdatenmenge der aktuellen (x+1) Zeitpunktstabelle visualisiert hervorgehoben auf dem Bildschirm dargestellt werden.

11. Verwendung des vorhergehenden Verfahrens als Rekordladeverfahren in Datenbanken, wobei die Operationen Insert und/oder Update unter Berücksichtigung des vorhergehenden Verfahrens erkannt werden und anhand dieser der Datenimport ausgeführt wird.

12. Verfahren nach einem oder mehreren der vorhergehenden Ansprüche, **dadurch gekennzeichnet, dass** bei der Suche lediglich die Übereinstimmung eines Kompressionselementes der Zeilen geprüft wird, wobei dieses Element die weiteren Elemente der Zeile codiert.

13. Verfahren nach dem vorhergehenden Anspruch, **dadurch gekennzeichnet, dass** beim Fehlen eines solchen Kompressionselementes eine weitere Tabelle angelegt wird, die eindeutige Schlüssel der ersten Tabelle enthält und Kompressionselemente, wobei der Vergleich lediglich über die weitere Tabelle erfolgt.

14. Computerprogramm, **dadurch gekennzeichnet, dass** es beim Ablauf auf einem Computer das Verfahren nach einem oder mehreren der vorhergehenden Verfahrensansprüche ausführt.

15. Datenträger, auf dem eine Datenstruktur gespeichert ist, die nach einem Laden in einen Hauptspeicher eines Computers das Verfahren nach einem oder mehreren der vorhergehenden Verfahrensansprüche ausführt.

16. Computersystem, bestehend aus einem oder mehreren Servern, **gekennzeichnet durch** Mittel, insbesondere Speicher, Netzwerkeinheiten, Prozessoren und Bussysteme, die so ausgebildet und eingerichtet sind, das ein Verfahren nach einem oder mehreren der vorhergehenden Verfahrensansprüche ausgeführt wird.
